Europäisches Patentamt

European Patent Office

Office européen des brevets

(19)

(11) Numéro de publication: **0 114 549**
**B1**

(12)

# FASCICULE DE BREVET EUROPÉEN

(45) Date de publication du fascicule du brevet:
25.02.87

(51) Int. Cl.⁴: **F 16 D 55/224** .

(21) Numéro de dépôt: **83402430.9**

(22) Date de dépôt: **15.12.83**

(54) **Frein à disque.**

(30) Priorité: **23.12.82 FR 8221687**

(43) Date de publication de la demande:
**01.08.84 Bulletin 84/31**

(45) Mention de la délivrance du brevet:
**25.02.87 Bulletin 87/9**

(84) Etats contractants désignés:
**DE FR GB IT NL SE**

(56) Documents cité:
**FR-A-1 390 337**
**FR-A-2 272 298**
**FR-A-2 409 423**
**FR-A-2 488 962**
**US-A-4 004 658**

(73) Titulaire: **BENDIX France, 126, rue de Stalingrad,
F-93700 Drancy (FR)**

(72) Inventeur: **Mery, Jean- Claude, 61 rue Emile Zola,
F-93320 Pavillons sous Bois (FR)**

(74) Mandataire: **Poidatz, Emmanuel, Service Brevets
Bendix 44 rue François 1er, F-75008 Paris (FR)**

LIBER, STOCKHOLM 1987

## Description

Du counaît déjà un frein à disque correspondant au préambule de la revendication 1 (FR-A-2 272 298), c'est-à-dire un frein à disque avec étrier monté coulissant sur une unique colonnette. La plaque porte-garniture du patin intérieur est ici retenue en position circonférentielle aussi bien que radiale par l'intermédiaire de pattes de forme rectangulaire s'engageant à la manière de tenons dans des évidements jouant le rôle de mortaises qui son pratiqués dans les branches du support fixe. Pour éviter le basculement de l'étrier autour de la colonnette lors d'une manoeuvre de freinage, celui-ci comporte, à l'opposé de la colonnette, un tenon rectangulaire qui s'engage en coulissement das la même mortaise que celui de la plaque porte-garniture. Une telle construction fait obstacle au remplacement rapide des patins usés par extraction radiale hors de l'étrier, et rend nécessaire un dégagement préalable de l'étrier hors de sa mortaise de verrouillage avant de pouvoir le faire pivoter autour de la colonnette de guidage.

Un aufre exemple frein à disque de ce type est connu par le brevet FR-A-2 409 423. Dans ce frein à disque, l'étrier est monté sur deux colonnettes. De ce fait, il faut veiller à un parfait parallélisme des alésages de guidage prévus sur l'étrier et recevant la partie libre des colonnettes montées par leur autre extrémité sur le support fixe.

En détail, ce frein à disque comprend un étrier qui est monté coulissant parallèlement à l'axe du disque de frein sur un support fixe solidaire d'un châssis, deux patins de friction disposés dans ledit étrier de part et d'autre du disque et montés coulissants parallèlement audit axe, une ouverture rectangulaire de montage ménagée dans l'étrier et délimitée par deux bords de guidage parallèles à l'axe dudit disque pour permettre le passage de la partie active des patins de friction dont chaque plaque porte-garniture présente en face du bord de guidage correspondant un bec d'appui, une clavette transversale susceptible d'être introduite entre un bord de guidage de l'étrier et le bec d'appui correspondant des deux plaques pour maintenir les patins en position radiale, ainsi qu'un moteur de commande monté sur la partie intérieure de l'étrier et susceptible de solliciter le patin intérieur en direction du patin extérieur qui prend appui contre le nez d'étrier.

Il est également connu de monter l'étrier sur le support fixe par l'intermédiaire d'une seule colonnette (voir par exemple le brevet FR-A-2 488 962). Dans ce cas, les plaques porte - garniture des deux patins sont montées dans le support fixe de façon à pouvoir se déplacer parallèlement à l'axe du disque de frein et à transmettre le couple de freinage directement par leur face frontale sur des faces d'appui prévues à cet effet sur le support fixe dont la partie active, de ce fait, doit être disposée - dans le sens de rotation du disque - en aval de l'étrier et enjamber le disque de frein. Il s'ensuit un risque de torsion et de manque de parallélisme qui conduit à une usure inégale des garnitures de frein. Pour éviter un basculement intempestif de l'étrier, celui-ci est bloqué en rotation par une vis engagée dans un taraudage ménagé dans la plaque porte-garniture du patin extérieur. Bien qu'en principe aucun effort ne soit appliqué sur la vis de liaison entre le patin extérieur et l'étrier, il arrive assez fréquemment que ladite vis soit déformée et empêche la suppression de la liaison étrier-patin et, par suite, le basculement de l'étrier autour de l'axe de la colonnette et, donc, le remplacement rapide des patins.

Dans un autre frein à disque d'un type différent quant au mode guidage en coulissement de l'étrier qui est décrit dans le brevet FR-A-1 390 337, les plaques porte-garniture des patins de friction possèdent chacune un bord latéral muni d'une oreille semi-circulaire de pivotement qui est reçue dans un logement semi - cylindrique de verrouillage formé dans le support fixe, et un autre bord latéral en forme d'arc de cercle dont le rayon est égal à la distance entre l'axe de pivotement de ladite oreille et un bord de guidage également en forme d'arc de cercle formé sur le côté correspondant de l'étrier. La plaque est retenue en position par une butée de verrouillage constituée par une vis portée par l'étrier, vis dont l'enlèvement est nécessaire pour permettre l'extraction du patin par pivotement autour de son oreille semi - circulaire; ce frein présente ainsi les mêmes inconvénients que ceux déjà signalés à propos du brevet FR-A-2 488 962.

Partant de cet état de la technique, la présente invention se donne pour but de supprimer les inconvénients précités et de réaliser un frein à disque du type initialement mentionné qui, malgré le montage de l'étrier sur une colonnette unique, soit compact et assure une transmission du couple de freinage au support fixe, aussi bien directement que par l'intermédiaire de l'étrier, tout en garantissant à l'étrier un verrouillage en basculement qui peut être supprimé à volonté et sans difficulté.

Ce but est atteint, conformément à l'invention, et dans un frein à disque du type initialement mentionné et dont la plaque porte-garniture du patin intérieur comporte un bord latéral muni d'une oreille de pivotement et un autre bord latéral en forme d'arc de cercle selon l'enseignement du dernier des brevets susmentionnés, grâce au fait que la clavette coopère avec le bord de guidage de l'étrier qui est à l'opposé de la colonnette pour compenser un jeu tant radial que tangentiel ménagé de construction entre ledit bord de guidage et le bec d'appui correspondant de la plaque porte-garniture, que l'oreille de pivotement et le logement de verrouillage y associé sont formés en dessous dudit bord de guidage, et que l'oreille de pivotement possède un rayon de courbure légèrement inférieur à celui du logement de verrouillage afin de permettre, une fois enlevée la clavette, un pivotement limité de l'étrier autour de la colonnette ainsi qu'un pivotement en sens inverse du patin autour du centre de l'oreille de pivotement puis du bord d'appui de l'étrier.

Grâce à cette conception, le patin intérieur s'arc-boute à la fois contre le logement de verrouillage du support fixe et le bord de guidage voisin de la colonnette et empêche ainsi l'étrier de pivoter autour de la colonnette mais, dès que la clavette est amenée dans sa position de déverrouillage, l'étrier peut être basculé légèrement, de sorte que le flanc inférieur du bord de guidage voisin de la colonnette s'écarte légèrement du flanc inférieur du bec d'appui correspondant de la plaque porte-garniture du patin intérieur. De ce fait, le verrouillage par arc-boutement du patin intérieur entre le support fixe et l'étrier est supprimé et le patin intérieur peut être pivoté autour de l'axe du logement de verrouillage, par exemple dans le sens contraire aux aiguilles d'une montre et après avoir tiré l'oreille hors de son logement et, le cas échéant, le patin intérieur hors de l'étrier, on peut faire pivoter ledit étrier autour de la colonnette au sens contraire, c'est-à-dire, par exemple, dans le sens des aiguilles d'une montre.

L'objet de l'invention sera encore mieux compris à l'aide de la description suivante d'un mode de réalisation illustré sur les dessins annexés sur lesquels:

- la figure 1 est une vue en plan du frein à disque;
- la figure 2 est une vue en élévation du côté intérieur du frein à disque suivant la flèche II des figures 1 et 4;
- la figure 3 est une vue en élévation du côté extérieur du frein à disque suivant la flèche III des figures 1 et 4 et,
- la figure 4 est une vue en élévation d'une coupe radiale à travers le frein à disque suivant la ligne IV-IV de la figure 1.

Le frein à disque selon l'invention comprend un étrier I qui coiffe par ses deux branches latérales un disque de frein 2 mobile en rotation autour d'un axe non représenté. A l'une de ses extrémités, c'est-à-dire l'extrémité arrière - dans le sens de rotation $F_1$ du disque correspondant à la marche avant -, l'étrier 1 est monté par l'intermédiaire d'une colonnette 3 sur un support fixe 4 solidaire d'un châssis, de façon à pouvoir coulisser sur ladite colonnette 3, parallèlement à l'axe du disque 2. L'étrier 1 comporte une ouverture périphérique de montage 5 qui est de forme rectangulaire et qui est ménagée dans l'étrier 1 pour permettre le passage de la partie active des patins de friction 6 et 7,

Le patin 6, qui prend appui sur le nez d'étrier 8 est appelé patin extérieur et le patin 7 coopérant directement avec le moteur de commande 9 incorporé dans l'étrier l'est appelé patin intérieur. Chaque patin 6, 7 comprend une plaque porte-garniture 10, 11 réalisée en un métal approprié ainsi qu'une garniture de freinage 12, 13 appliquée sur l'une des faces latérales du disque de frein 2.

Les côtés avant et arrière de l'ouverture de passage 5 de l'étrier 1 sont délimités respectivement par un bord de guidage 14, 15 qui s'étend parallèlement à l'axe du disque de frein 2 et qui coopère avec l'un des deux becs d'appui 16, 17 ou 18, 19 de la plaque porte-garniture 10 ou 11 du patin extérieur 6 ou intérieur 7. Chaque bord de guidage présente la forme d'une nervure droite dont la section présente une forme en V et dont le flanc supérieur est situé dans un plan parallèle à un plan tangent au disque de frein 2.

D'une façon analogue, chaque bec d'appui 16, 17, 18 et 19 présente une rainure droite dont la section transversale est également en forme de V et dont le flanc supérieur se trouve également dans un plan également parallèle au même plan tangent précédemment mentionné. En dessous des becs d'appui 16, 17 ou 18, 19, chaque plaque porte-garniture 10, 11 se rétrécit progressivement suivant une forme courbe en direction de l'axe du disque de frein 2, de sorte que la largeur maximale de chaque plaque porte-garniture 10 et 11 immédiatement en dessous des becs d'appui est inférieure à la distance séparant les arêtes supérieures 28 des deux bords de guidage 14 et 15 d'une valeur égale à l'épaisseur d'une clavette de verrouillage 20 dont la section transversale présente également une forme en V et est interposée entre un bord de guidage, par exemple 14, et les becs d'appui correspondants, par exemple 16 et 18 des plaques porte-garniture 10 et 11. Grâce à cette clavette de verrouillage qui s'introduit dans le sens parallèle aux bords de guidage 14 ou 15 pour combler l'intervalle subsistant entre ledit bord de guidage et les becs d'appui correspondants, les becs d'appui opposés sont appliqués contre le bord de guidage 15 et comme les flancs inférieurs de chaque bord de guidage 14, 15 et de chaque bec d'appui correspondant 16, 18 et 17 sont inclinés les uns vers les autres de façon à rétrécir l'ouverture de passage 5 vers l'extérieur - pris dans le sens radial - les plaques porte-garniture 10 et 11 restent bloquées sur les flancs inférieurs de la clavette et des bords de guidage 14 et 15 contre tout déplacement radial tout en pouvant se déplacer parallèlement à l'axe du disque de frein 2. La structure de ces bords de guidage 14 et 15, des becs d'appui 16 à 19 et de la languette de verrouillage transversale 20 étant largement connue par le brevet français 77 34537 ( FR-A-2 409 423), il n'est pas nécessaire de la décrire ici davantage. Une goupille de sécurité 21 s'engageant dans un trou extrême de la clavette 20 permet d'assurer ladite clavette 20 contre tout déplacement transversal intempestif par butée, soit sur le bord de guidage correspondant, par exemple 14, soit sur la tête de vis adjacente.

On comprend aisément que les patins 6 et 7 peuvent être introduits radialement dans l'étrier 1 à travers l'ouverture de passage 5 ou être enlevés radialement dudit étrier lorsque la clavette 20 est retirée ou placée dans une position inactive de déverrouillage.

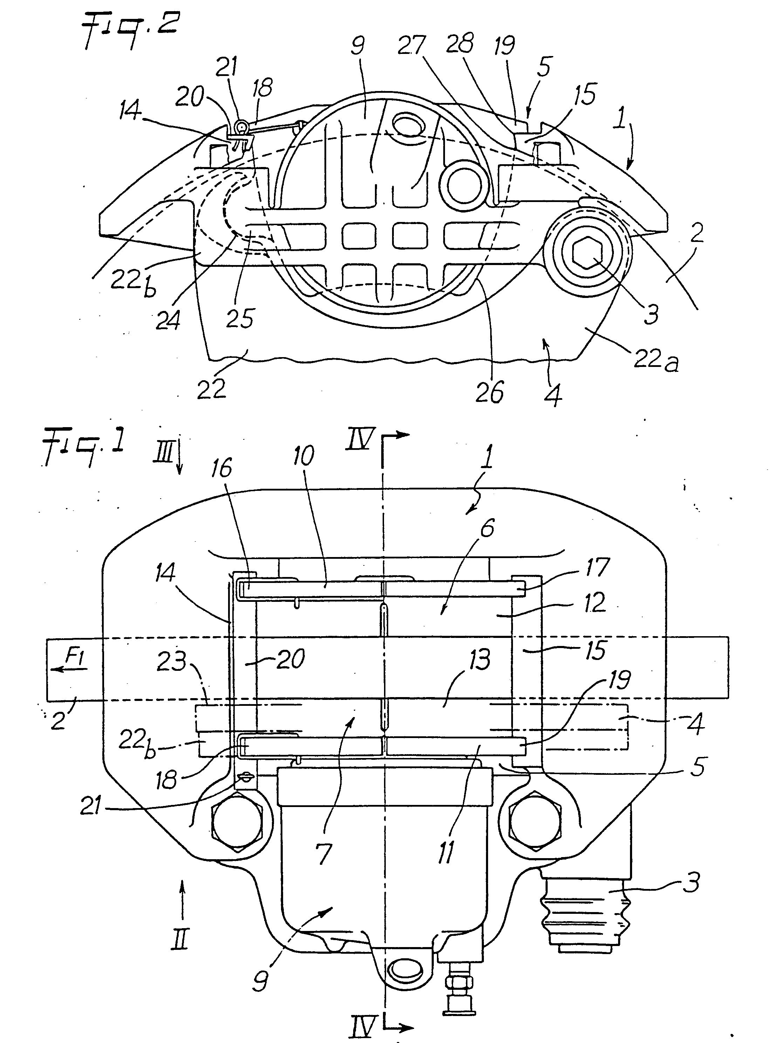

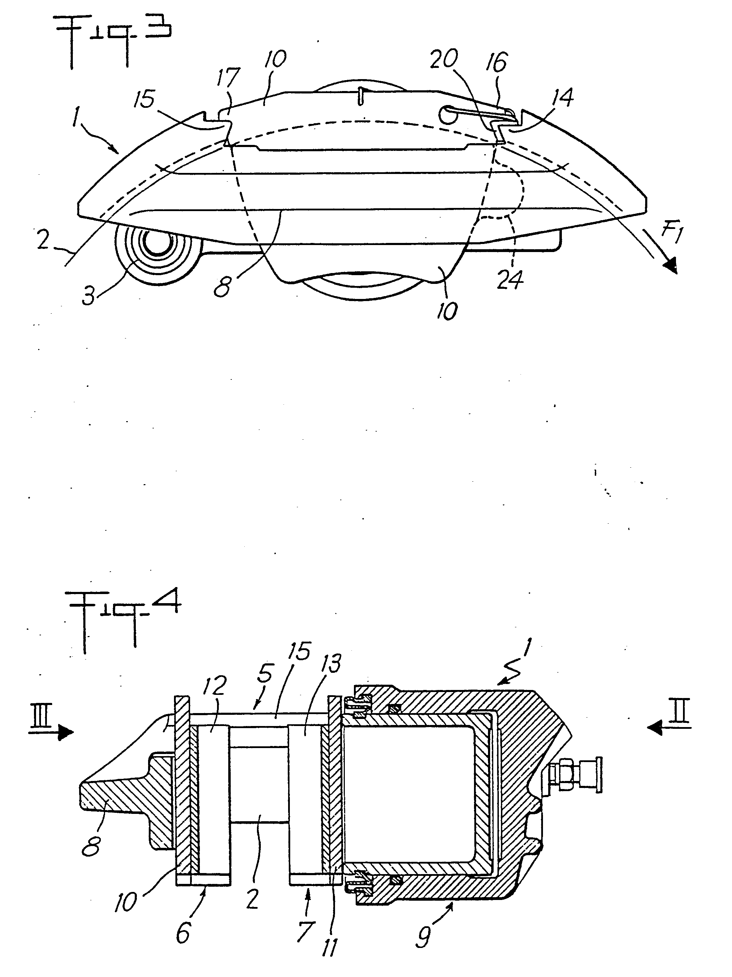

Au niveau de l'étrier 1, le support fixe 4 est réalisé sous forme d'une plaque échancrée 22 de façon à entourer la partie inférieure du patin intérieur 7 par deux cornes d'extrémité 22a et 22b, la face extérieure 23 de ladite plaque s'étendant parallèlement au disque de frein 2 au voisinage de ce dernier. La colonnette 3 est fixée sur la corne arrière 22a du support fixe 4 en dessous d'un des bords de guidage, par exemple 15, de l'étrier 1 et aussi près que possible de la périphérie du disque de frein 2. En dessous de l'autre bord de guidage, par exemple 14, la corne antérieure 22b du support fixe 4 pénètre dans l'étrier 1 jusqu'en dessous du bord de guidage 14 et comporte un logement semi-cylindrique de verrouillage 24 dont l'axe est parallèle à l'axe du disque de frein 2 et qui est ouvert vers le bord de guidage 15 voisin de la colonnette 3. En face de ce logement semi-cylindrique de verrouillage 24, la plaque porte-garniture 11 du patin intérieur 7 comporte une oreille semi-cylindrique de pivotement 25 dont le rayon de courbure est légèrement inférieur à celui du logement de verrouillage 24 et dont une partie de son pourtour s'applique contre le fond du logement de verrouillage 24, un certain jeu radial subsistant aux deux extrémités dudit logement 24 entre la face intérieure de ce logement et la partie correspondante du pourtour de l'oreille de pivotement 25. Comme on peut le voir sur la figure 2, l'oreille de pivotement 25 prend appui dans le fond du logement de verrouillage 24 pendant que le bec d'appui 19 associé au bord de guidage 15 voisin de la colonnette 3 est appliqué contre ledit bord de guidage 15. On comprendra donc aisément que le support fixe 4 reçoit directement le couple de freinage appliqué au patin intérieur 7 et empêche tout basculement intempestif de l'étrier autour de la colonnette 3, du fait que les appuis de la plaque porte-garniture 11 du patin intérieur 7, d'une part, dans le fond du logement de verrouillage 24 du support fixe 4 et, d'autre part, sur le bord de guidage 15 de l'étrier 1, constituent une sorte de liaison de verrouillage par arc-boutement.

Comme précédemment mentionné, la face frontale 26 de la plaque porte-garniture 11 du patin intérieur 7, face frontale faisant suite au flanc inférieur oblique du bec d'appui 19, présente la forme courbe d'un cylindre partiel et est situé à l'intérieur d'un cylindre fictif dont le rayon est égal à la distance entre le centre de pivotement de l'oreille 25 et l'arête inférieure 27 du flanc inférieur du bord d'appui 15. La distance entre l'axe ou le centre de pivotement de l'oreille 25 et l'arête supérieure 28 du bord de guidage 15, arête supérieure 28 déterminée par la jonction des deux flancs latéraux du bord de guidage 15, est légèrement inférieure à la distance séparant le centre ou l'axe de pivotement de l'oreille 25 de l'arête inférieure 27 dudit bord de guidage 15. Il s'ensuit que la plaque porte-garniture 11 du patin intérieur 7 est bloquée contre tout basculement vers le haut autour de l'axe ou du centre de pivotement de l'oreille 25. Toutefois, lorsque la clavette de verrouillage 20 est placée dans une de ses positions inactives, l'extrémité de l'étrier 11, située du côté de la corne 22b du support fixe 4, peut être légèrement soulevée, de sorte que l'étrier et, par suite l'arête supérieure 28 du bord de guidage 15 basculent légèrement autour de l'axe de la colonnette 3 dans le sens des aiguilles d'une montre en s'écartant du trajet de basculement de la plaque porte-garniture 11 autour de l'axe de pivotement de l'oreille de pivotement 25, ce pivotement s'effectuant dans le sens contraire aux aiguilles d'une montre. La garniture intérieure 7 peut alors être retirée de l'étrier 1 en suivant un trajet oblique.

Bien entendu, le montage ou le démontage du patin extérieur 6 s'effectuent dans le sens radial comme dans le cas connu par le brevet français 2 409 423.

Le remplacement du patin de friction 6 et 7 s'effectue de la manière suivante: A partir de la position indiquée sur le dessin, on place d'abord la clavette 20 dans une position inactive permettant l'enlèvement radial du patin extérieur 6. Ensuite, on place la clavette 20 dans une position inactive pour le patin intérieur 7 de sorte que l'étrier 1 peut être basculé légèrement vers le haut autour de la colonnette 3. A ce moment, la liaison par arc-boutement de la plaque porte-garniture 11 du patin intérieur 7 entre le logement de verrouillage 24 et le bord de guidage 15 voisin de la colonnette 3 est rompue et le patin intérieur 7 peut l'oreille 25 dans le sens contraire aux aiguilles d'une montre. L'étrier 1 et le patin intérieur 7 sont ainsi basculés en sens contraire jusqu'à un point où le patin intérieur peut être retiré obliquement de l'étrier 1. On procède dans le sens chronologique inverse pour le montage de nouveaux patins. On introduit le patin intérieur dans l'étrier 1 en position basculée et on engage l'oreille 25 dans le logement de verrouillage 24 du support fixe 4, puis on rabat l'étrier 1 dans le sens contraire aux aiguilles d'une montre tout en engageant le bec d'appui 19 de la plaque porte-garniture 11 du patin intérieur 7 sur le bord de guidage 15 voisin de la colonnette 3. Ensuite, on rabat aussi le patin intérieur dans sa position de travail en le faisant pivoter autour de l'axe de pivotement de son oreille 25 dans le sens des aiguilles d'une montre pendant que l'on continue à rabattre légèrement l'étrier 1 dans le sens contraire aux aiguilles d'une montre autour de la colonnette 3. Lorsque la position de travail est atteinte, position qui correspond d'ailleurs à la liaison par arc-boutement de l'étrier 1 au support fixe 4 par l'intermédiaire du patin intérieur 7, on introduit dans l'étrier 1 le patin extérieur 6 et on verrouille les deux patins à l'aide de la clavette 20 et de la goupille ou épingle 21.

Un des avantages essentiel du frein à disque conforme à la présente invention réside dans la division de la transmission du couple de freinage qui est reçue, d'une part, à travers l'étrier 1 et la colonnette 3 par le support fixe et, d'autre part, directement du patin intérieur 7 par le logement de verrouillage 24 prévu sur ledit support fixe 4.

Le mode de réalisation précédemment décrit subira certains nombres de modifications sans que l'on sorte du cadre de protection défini par les revendications annexées, en particulier le support fixe 4 peut avantageusement être réalisé directement sur le porte - fusée du véhicule et le frein ne nécessite alors aucun autre support fixe.

**Revendications**

1. Frein à disque comprenant un étrier (1) monté coulissant sur un support fixe (4) par l'intermédiaire d'une colonnette unique (3) parallèle à l'axe du disque de frein (2), deux patins de friction (6, 7) disposés dans ledit étrier (1) de part et d'autre du disque (2) et montés coulissants parallèlement audit axe, une ouverture rectangulaire de montage (5) ménagée dans l'étrier (1) et délimitée par deux bords de guidage (14, 15) parallèles à l'axe dudit disque (2) pour permettre le passage de la partie active des patins de friction (6, 7) dont chaque plaque porte-garniture (10, 11) présente en face du bord de guidage correspondant un bec d'appui (16, 17, 18, 19) et dont la plaque porte-garniture (11) du patin intérieur (7) comporte en outre un bord latéral muni d'une oreille (25) qui est reçue dans un logement de verrouillage (24) formé dans le support fixe (4), ainsi qu'un moteur de commande (9) monté sur la partie intérieure de l'étrier (1) et susceptible de solliciter le patin intérieur (7) en direction du patin extérieur (6) qui prend appui contre le nez d'étrier, lequel frein à disque est caractérisé en ce qu'une clavette (20) transversale est introduite entre un bord de guidage (14) de l'étrier et le bec d'appui correspondant (16, 18) des deux plaques (10, 11) pour maintenir les patins (6,7) en position radiale, en ce que cette clavette (20) coopère avec le bord de guidage (14) de l'étrier (1) qui est à l'opposé de la colonnette (3) pour compenser un jeu tant radial que tangentiel ménagé de construction entre ledit bord de guidage (14) et le bec d'appui correspondant (18) de la plaque porte-garniture (11), en ce que l'oreille de pivotement (25) a une forme semi-circulaire et le logement de verrouillage (24) est semi-cylindrique tous les deux étant arrangés en dessous dudit bord de guidage (14), en ce que ladite plaque porte-garniture comporte un autre bord latéral (26) en forme d'arc de cercle dont le rayon est égal à la distance entre l'axe de pivotement de ladite oreille (25) et l'arête inférieure d'appui (27) du bord de guidage opposé (15) et en ce que l'oreille de pivotement (25) possède un rayon de courbure légèrement inférieur à celui du logement de verrouillage (24) afin de permettre, une fois enlevée la clavette (20), un pivotement limité de l'étrier (1) autour de la colonnette (3) ainsi qu'un pivotement en sens inverse du patin (7) autour du centre de l'oreille de pivotement (25) puis du bord d'appui (14) de l'étrier.

2. Frein à disque selon la revendication 1, caractérisé en ce que le support fixe (4) comporte une plaque échancrée (22) qui entoure la partie inférieure du patin intérieur (7) et qui présente deux cornes d'extrémité (22a, 22b) pénétrant dans l'étrier (1) jusqu'au voisinage des bords de guidage (14, 15) et situées à côté du disque de frein (2), l'une (22a) des cornes portant la colonnette (3) et l'autre (22b) comportant le logement de verrouillage (24).

3. Frein à disque selon l'une des revendications 1 et 2, caractérisé en ce que, en position de verrouillage de l'étrier (1) et du patin intérieur (7), la distance entre le centre de pivotement de l'oreille de pivotement (25) dudit patin intérieur (7) et l'arête supérieure (28) du bord de guidage (15) voisin de la colonnette (3) est légèrement inférieure à la distance séparant l'axe de pivotement de ladite oreille (25) de l'arête inférieure (27) dudit bord de guidage (15).

**Patentansprüche**

1. Scheibenbremse mit einem Bremssattel (10), der an einem ortsfesten Bremsträger (4) mittels eines einzigen Bolzens (3) parallel zur Achse der Bremsscheibe (2) gleitend gelagert ist, zwei Bremsbacken (6, 7), die im Bremssattel (1) beidseitig zur Bremsscheibe (2) angeordnet und parallel zu der besagten Achse gleitend gelagert sind, einer rechteckigen Aufnahmeöffnung (5), die in dem Bremssattel (1) gebildet ist und von zwei zur Achse der Bremsscheibe (2) parallelen Führungsrändern (14, 15) begrenzt wird, um den Durchtritt des aktiven Teils der Bremsbacken (6, 7) zu ermöglichen, deren Belagträgerplatten (10, 11) angrenzend am entsprechenden Führungsrand einen schnabelförmigen Führungsabschnitt (16, 17, 18, 19) aufweist, wobei die Belagträgerplatte (11) des inneren Bremsbackens (7) außerdem an einem seitlichen Rand mit einem Gelenkvorsprung (25) versehen ist, der von einer im Bremsträger (14) gebildeten Verriegelungspfanne (24) aufgenommen wird, sowie einem Bremsmotor (9), der in dem inneren Abschnitt des Bremssattels (1) gelagert ist und den inneren Bremsbacken (7) in Richtung auf den äußeren Bremsbacken (6) vorspannt, welcher an dem Außenschenkel des Bremssattels anliegt, dadurch gekennzeichnet, daß ein quer verlaufendes Zwischenstück (20) zwischen einen Führungsrand (14) des Bremssattels und den entsprechenden Führungsabschnitt (16, 18) der beiden Belagträgerplatten (10, 11) eingesetzt ist, um die Bremsbacken (6, 7) radial zu positionieren, daß das Zwischenstück (20) mit dem dem Bolzen (3) gegenüberliegenden Führungsrand (14) des Bremssattels (1) zusammenwirkt, um ein herstellungsbedingtes Spiel sowohl in radialer wie auch tangentialer Richtung zwischen dem Führungsrand (14) und dem entsprechenden Führungsabschnitt (18) der Belagträgerplatte (11) auszugleichen, daß der Gelenkvorsprung (25) halbkreisförmig und die Verriegelungspfanne (24) halbzylindrisch ausgebildet ist, wobei die beiden unterhalb des besagten Führungsrandes (14) angeordnet sind, daß die besagte Belagträgerplatte einen weiteren seitlichen Rand (26) in Form eines Halbkreises besitzt, dessen Radius gleich dem Abstand zwischen der Gelenkachse des Gelenkvorsprungs (25) und dem unteren Anschlag (27) des gegenüberliegenden Führungsrandes (15) ist, und daß der Gelenkvorsprung (25) einen Krümmungsradius besitzt, der geringfügig kleiner ist als der der Verriegelungspfanne (24), um bei entferntem Zwischenstück (20) eine begrenzte Schwenkbewegung des Bremssattels (1) um den Bolzen (3) sowie eine umgekehrte Schwenkbewegung des Bremsbackens (7) um den Mittelpunkt des Gelenkvorsprungs (25) und dann um den Führungsrand (14) des Bremssattels zu ermöglichen.

2. Scheibenbremse nach Anspruch 1, dadurch gekennzeichnet, daß der Bremsträger (4) eine ausgesparte Platte (22) aufweist, die den unteren Abschnitt des inneren Bremsbackens (7) umgibt und die zwei hornförmige Endansätze (22a, 22b) aufweist, die in den Bremssattel (1) bis zu den Führungsrändern (14, 15) vorstehen und neben der Bremsscheibe (2) angeordnet sind, wobei einer (22a) der Endansätze den Bolzen (3) trägt und der andere (22b) die Verriegelungspfanne (24) enthält.

3. Scheibenbremse nach einem der Ansprüche 1 und 2, dadurch gekennzeichnet, daß in der Verriegelungsstellung des Bremssattels (1) und des inneren Bremsbackes (7) der Abstand zwischen dem Gelenkmittelpunkt des Gelenkvorsprungs (25) des inneren Bremssattels (7) und dem oberen Anschlag (28) des Führungsrandes (15) angrenzend am Bolzen (3) geringfügig kleiner ist als der Abstand, der die Gelenkachse des Gelenkvorsprungs (25) von dem unteren Anschlag (25) des Führungsrandes (15) trennt.

**Claims**

1. Disc brake comprising a caliper (1) slidingly mounted on a fixed support (4) by means of a single column (3) parallel to the axis of the brake disc (2), a pair of friction pads (6, 7) disposed within the claiper (1) on either side of the disc (2) and slidingly mounted parallel to said axis, a rectangular mounting opening (5) provided in the caliper (1) and delimited by two guide edges (14, 15) parallel to the axis of said disc (2) to permit the passage of the active portion of the friction pads (6, 7) of which each support plate (10, 11) comprises an abutment shoulder (16, 17, 18, 19) adjacent the corresponding guide edge, the support plate (11) of the inboard brake pad (7) further comprising a lateral edge provided with a pivot projection (25) received within a locking depression (24) formed in the fixed support (4), and a brake motor (9) mounted on the inboard portion of the caliper (1) and adapted to urge the inboard brake pad (7) towards the outboard brake pad (6) which engages the outboard leg of the caliper, which disc brake is characterized in that a transverse key member (20) is introduced between a guide edge (14) of the claiper and the corresponding abutment shoulder (16, 18) of the two support plates (10, 11) to maintain the brake pads (6, 7) in their radial positions, in that said key member (20) cooperates with the guide edge (14) of the caliper (1) opposite the column (3) to compensate a radial as well tangential play between said guide edge (14) and the corresponding abutment shoulder (18) of the support plate (11) due to manufacturing tolerance, in that the pivot projection (25) is of a semicircular form and the locking depression (24) is semicylindrical, both of them being arranged below said guide edge (14), in that said support plate comprises another lateral edge (26) shaped as a circular arc having a radius which is equal to the distance between the pivot axis of said pivot projection (25) and the lower abutment (27) of the opposite guide edge (15), and in that the pivot projection (25) has a radius of curvature which is slightly smaller than that of the locking depression (24) in order to permit, when the key member (20) has been removed, a limited pivoting of the caliper (1) about the column (3) as well as a pivoting of the brake pad (7) in the opposite direction about the center of the pivot projection (25) and then about the guide edge (14) of the caliper.

2. Disc brake according to claim 1, characterized in that the fixed support (4) comprises a recessed plate (22) which surrounds the lower portion of the inboard brake pad (7) and which has a pair of ear-shaped extremities (22a, 22b) extending into the caliper (1) adjacent to the guide edges (14, 15) and disposed along the brake disc (2), one (22a) of the extremities supporting the column (3) and the other (22b) including the locking depression (24).

3. Disc brake according to any of claims 1 and 2, characterized in that, when the caliper (1) and the inboard brake pad (7) are in their locking positions, the distance between the pivot center of the pivot projection (25) of the inboard brake pad (7) and the upper abutment (28) of the guide edge (25) adjacent the column (3) is slightly smaller than the distance separating the pivot axis of the pivot projection (25) from the lower abutment (27) of the guide edge (15).

Fig.2

Fig.1

Fig 3

Fig 4